Europäisches Patentamt

European Patent Office

Office européen des brevets

(19)

(11) Publication number: **0 037 822**
**B1**

(12) **EUROPEAN PATENT SPECIFICATION**

(45) Date of publication of patent specification: **05.10.83**    (51) Int. Cl.³: **F 16 C 1/10, B 60 T 1 1/06**

(21) Application number: **80901953.2**

(22) Date of filing: **20.10.80**

(86) International application number:
**PCT/GB80/00174**

(87) International publication number:
**WO 81/01178 30.04.81 Gazette 81/11**

(54) **Vehicle brake system.**

(30) Priority: **19.10.79 GB 7936361**
**20.02.80 GB 8005648**

(43) Date of publication of application:
**21.10.81 Bulletin 81/42**

(45) Publication of the grant of the patent:
**05.10.83 Bulletin 83/40**

(84) Designated Contracting States:
**DE FR GB**

(56) References cited:
**DE - A - 2 454 240**
**DE - A - 2 815 743**
**FR - A - 2 229 590**
**GB - A - 1 409 527**

(73) Proprietor: **BOWDEN CONTROLS LIMITED**
**Llanelli, Dyfed**
**South Wales SA14 9TF (GB)**

(72) Inventor: **HAWTREE, George**
**88 Penyfan Road Llanelli, Dyfed**
**South Wales (GB)**

(74) Representative: **Main, Peter Stephen et al,**
**HYDE, HEIDE & O'DONNELL 146 Buckingham**
**Palace Road**
**London SW1W 9TR (GB)**

Courier Press, Leamington Spa, England.

Vehicle brake system

This invention relates to a vehicle brake system wherein an input force applied to an actuator such as a hand lever, exerts pull forces on the inner members of first and second Bowden-type flexible remote control mechanisms for simultaneously operating first and second brakes located at remote ends of such mechanisms, the flexible conduit of the first said mechanism being connected at or near its remote end to an abutment and having at or near its other end (which moves towards the actuator when this is operated by said input force) a coupling device by which it is connected to the inner member of the second said Bowden-type mechanism.

Such a system is known from German patent DE—A—2 815 743. That patent shows the system employed for operating the brakes of the opposed rear wheels of a four-wheel road vehicle. The inner member of the first Bowden-type mechanism is shown directly connected to the hand brake lever or foot pedal. In order to avoid the problem of forming a seal between the conduit of that first mechanism and the floor of the vehicle while leaving such conduit free to move axially responsive to the loading of the inner member, the end of such conduit carrying the coupling device is spaced appreciably from the hand-lever or other actuator so that such conduit can lie entirely beneath the vehicle floor, and the inner member of that mechanism is guided between such conduit and the actuator by a fixed guide sleeve passing through such floor.

It is an object of the present invention to provide a hand-brake system of the kind referred to and designed for operating four wheel brakes simultaneously.

The feature of the known system according to which the coupling device between the conduit of the first Bowden-type mechanism and the inner member of the second such mechanism moves towards the actuator when this is moved to apply a pull load to the two opposed wheel brakes is advantageous because the lay-out of the mechanisms can be favourable from the standpoint of high load transmission efficiencies. However it is not suitable for this lay-out to be simply duplicated for operating the other two wheel brakes. In order that the movement of the actuator shall operate all four brakes simultaneously and in a properly balanced manner, the additional Bowden-type mechanisms for operating the third and fourth brakes must be connected not only with each other and with the actuator, but also with the Bowden-type mechanisms for operating the first and second brakes.

The system according to the invention, which provides a solution to this problem, is defined in claim 1 hereof. In this system the actuator is operatively connected to the inner member of the first Bowden-type mechanism via end portions of third and fourth Bowden-type flexible remote control mechanisms for operating two further brakes located at the remote ends of those mechanisms. The inner member of the third Bowden-type mechanism is connected to or forms an extension of the inner member of the first Bowden-type mechanism, whereas the inner member of the fourth Bowden-type mechanism is connected to the conduit of said third mechanism. The actuator is connected to the conduit of the fourth mechanism. In consequence, an input force on the actuator exerts pull forces on the inner members of said third and fourth mechanisms thereby causing actuation of the third and fourth brakes simultaneously with the first and second.

The system according to the invention provides balanced pull forces on the four brakes responsive to a pull load applied by the actuator and the output force applied to each brake mechanism is a high percentage of the input load. The actuator may be a hand- or foot-operated element.

A system according to the invention is very suitable for operating the brakes of vehicle wheels with independent suspension. The inner members and the conduits of the Bowden-type mechanisms can be directly connected to the independently suspended wheel support units. It suffices to provide a single abutment, extraneous to said units, for sustaining the reaction force on the system.

As will hereafter be exemplified, an entire system according to the invention can be adjusted by a single adjustment facility.

For connecting the inner member of one Bowden-type mechanism to the conduit of another such mechanism, it is very advantageous to use a coupling device forming a passageway through which such conduit is threaded and subsequently secured in selected position therealong. This feature is beneficial in facilitating the setting up of the system in operative condition in a given vehicle. The employment of a coupling device of that form in mechanical remote control systems is the subject of our co-pending European patent application No 80901954.0 likewise dated 20th October 1980, published under the number WO 81/01179, and entitled "Mechanical remote control assemblies".

It is particularly advantageous if the conduit threaded through the passageway of such a coupling device forms an external screw profile and an adjustment nut or nuts is or are screwed directly onto such conduit for abutment against the coupling device as is exemplified hereinafter.

The Bowden-type mechanisms are preferably of the usual form wherein the inner member is a flexible wire or cable which slides in contact with the conduit or a conduit liner. But the Bowden-type mechanisms can be of a form comprising caged ball bearings by which the inner member is supported within the conduit. In such a mechanism the inner member can be in the form of a flexible strip. (See e.g. British Patent 1 000 550).

The invention includes a vehicle in which there is a braking installation incorporating the invention.

Certain embodiments of the invention, selected by way of example, will now be described with reference to the accompanying diagrammatic drawings, in which:

Fig. 1 is a general view of a two-wheel brake system operating on a known principle and is included for comparison purposes;

Fig. 2 is a general view of a four-wheel brake system according to the invention;

Fig. 3 shows in more detail a coupling device; and

Fig. 4 shows on the left-hand side a conduit adjustment nut and on the right-hand side a coupling device insert component.

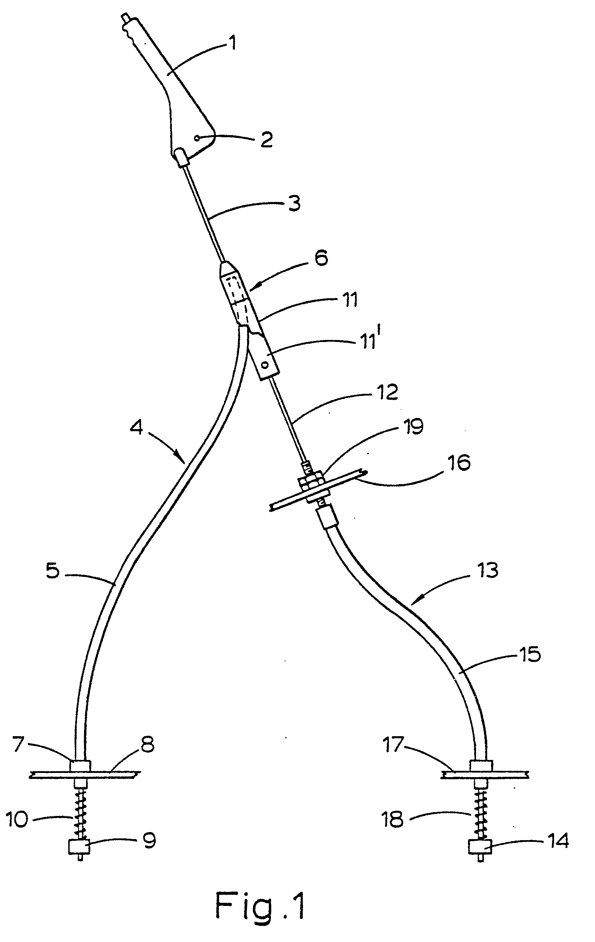

In the system shown in Figure 1, a hand-brake lever 1 is pivoted at 2 and is connected to the inner member 3 of a first Bowden-type mechanism 4. The end portion of the conduit 5 which is nearer the hand-brake lever 1 is secured in a socket in a coupling device 6. The end of the conduit remote from the hand-brake lever 1 carries a swaged end fitting 7 which is secured to an abutment 8 adjacent a left-hand wheel brake lever 9 to which the inner member 3 of the mechanism is connected. A helical return spring 10 is interposed between the end fitting 2 and the lever 9 so as to urge the mechanism 4 into its release position.

The coupling device 6 has spaced side lugs 11,11' to which one end of the inner member 12 of a second Bowden-type mechanism 13 is attached. The other end of such inner member is connected to the lever 14 of the right-hand wheel brake. The ends of the conduit 15 of this second mechanism are secured to abutments 16 and 17. A compression spring 18 is interposed between the said brake lever and the abutment 17 so that this spring also assists return of the system to its release position.

When the hand-brake lever is moved to apply the brakes, the tensile load on the inner member 3 of the mechanism 4 imposes a compressive reaction load on the conduit 5 of that mechanism. This compressive reaction load is transmitted to the coupling device 6 and from that device to the right-hand wheel brake via the inner member 12 of the second Bowden mechanism 13. Consequently the two brakes are applied simultaneously under balanced forces.

The coupling device 6 does not need to be supported by any means other than those shown. But further support means can be employed provided that it permits the required movements of the coupling device. For example the coupling device can be connected to a fixture by a pin and slot connection allowing bodily linear and slight pivotal motion of the coupling device.

The inner member 12 of the second Bowden mechanism 15 can be detachably connected to the lugs 11,11' of the coupling device. The second Bowden mechanism may be installed in the vehicle or assembled to a vehicle brake unit before being connected to the coupling device and the first Bowden mechanism can likewise be installed in the vehicle or connected to a said brake unit at any convenient time, independently of the second mechanism.

For adjusting the system, adjustment nuts 19 are provided on a threaded metal end fitting on the conduit 15 of the second Bowden mechanism. This type of adjustment facility on Bowden mechanisms is well known per se. By manipulation of the nuts the curvature and therefore the effective length of that second mechanism can be adjusted. And by virtue of the connection between the inner member of that mechanism and the coupling device 6, the adjustment is automatically accompanied by variation in the curvature and therefore the effective length of the first Bowden mechanism 4.

The form and orientation of the abutments 8 and 17 will depend on the vehicle design. They will not necessarily be orientated as shown in the figure. The system as shown in Fig. 1 can be employed for example for actuating the brakes of right-hand and left-hand front or rear vehicle wheels mounted on a rigid axle. In that case the abutments 8 and 17 can be fixtures located on the axle, near to the respective wheels, and orientated so that the projecting ends of the inner members of the two Bowden mechanisms are parallel with that axle.

The system shown in Fig. 1 can also be employed for actuating the brakes of independently suspended wheels. In this case, the abutments 8 and 17 will be fixtures on the wheel assemblies themselves. For example those abutments may be constituted by the housings of the brake mechanisms which include the levers 9 and 14, or they may be fixtures (relative to such levers), located within such housing, depending on the type of the brakes concerned.

The aggregate output force on the brake members is in excess of the force applied to the input end of the first Bowden mechanism and approaches a value equal to twice that applied force minus only a loss factor which depends on the operating efficiencies of the individual mechanisms.

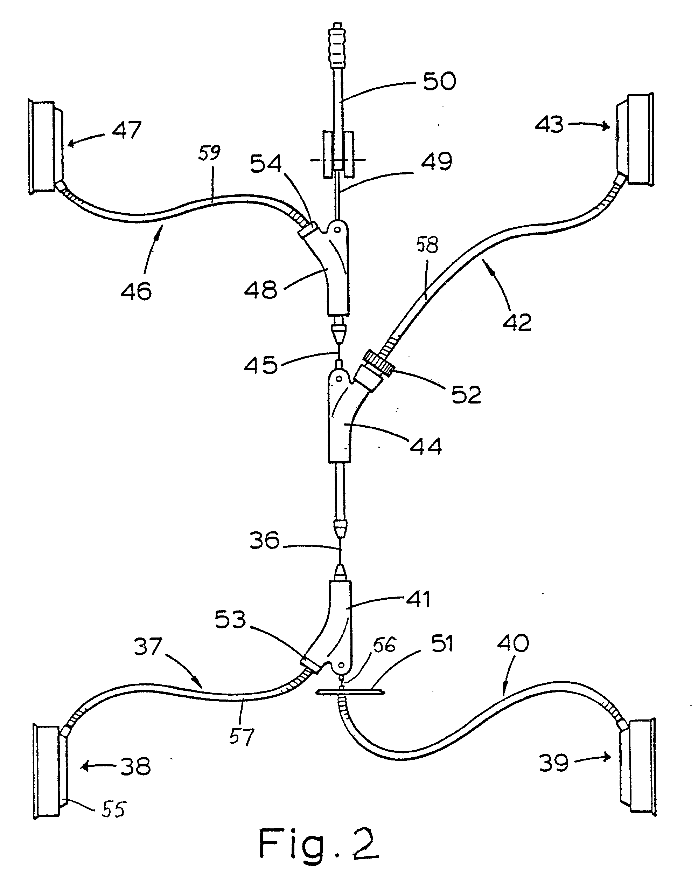

Reference is now made to the example of a four-wheel brake system according to the invention, shown in Fig. 2. The system is represented as applied to a vehicle with independent suspension of all four wheels.

Each of the brake assemblies 38,39,43,47 comprises a housing such as 55 which is secured to the associated wheel support unit (not shown) and which encloses the brake mechanism. The conduits of the Bowden-type mechanisms are secured to the said housings whereas the inner members of those mechanisms are connected to the parts of the brake mechanisms to be actuated.

Application of a pulling force on the inner member 36 of a first Bowden mechanism 37 connected to a wheel brake assembly 38 causes the brake of the opposed wheel brake assembly 39 to be simultaneously operated via a second Bowden mechanism 40 because the inner member 56 of that mechanism is connected by a coupling device 41 to the conduit 57 of the first Bowden mechanism 37. The operation of this part of the system is therefore in all essentials the same as the operation of the systems shown in Fig. 1. However in the Fig. 2 system, the inner member 36 is connected in alignment with or forms an extension of the inner member of a third Bowden mechanism 42 for operating the brake of a third wheel brake assembly 43. The conduit 58 of that mechanism passes through the passageway in a second coupling device 44 which is in turn connected to the inner member 45 of a fourth Bowden mechanism 46 extending to a fourth brake assembly 47. The conduit 59 of that fourth mechanism passes through a third coupling device 48. The coupling device 48 is connected by a tie 49 with a hand-brake lever 50. When a pulling force is applied to that tie by movement of the hand-brake lever, the load is transmitted via the third coupling device 48 to the fourth Bowden mechanism 46, via that fourth Bowden mechanism and the second coupling device 44 to the third Bowden mechanism 42, and via that third Bowden mechanism to the inner member of the first and second Bowden mechanisms 37 and 40. Operation of the hand lever therefore results in simultaneous application of all four wheel-brakes. The output force, applied to each brake mechanism, is a high percentage of the input load applied to the tie 49 by the hand-brake lever. The four output forces are balanced, i.e. equal to each other.

It is important to note that only one abutment extraneous to the wheel brake housings is required. In the illustrated arrangement the single abutment is represented at 51. And it is only necessary to provide a single adjustment facility. In the illustrated system this facility is in the form of an adjustment nut 52 which is screwed directly onto the conduit of the third Bowden mechanism 42 and is clamped onto that conduit by the coupling device 44. The coupling devices 41 and 48 are secured to their respective conduits by suitable clamping means when the system is initially set up and such clamping means do not have subsequently to be released. The clamping means may comprise clamping screws which cause the coupling devices to grip the conduits, or end clamping plugs 53,54 which are forced into the ends of the coupling devices.

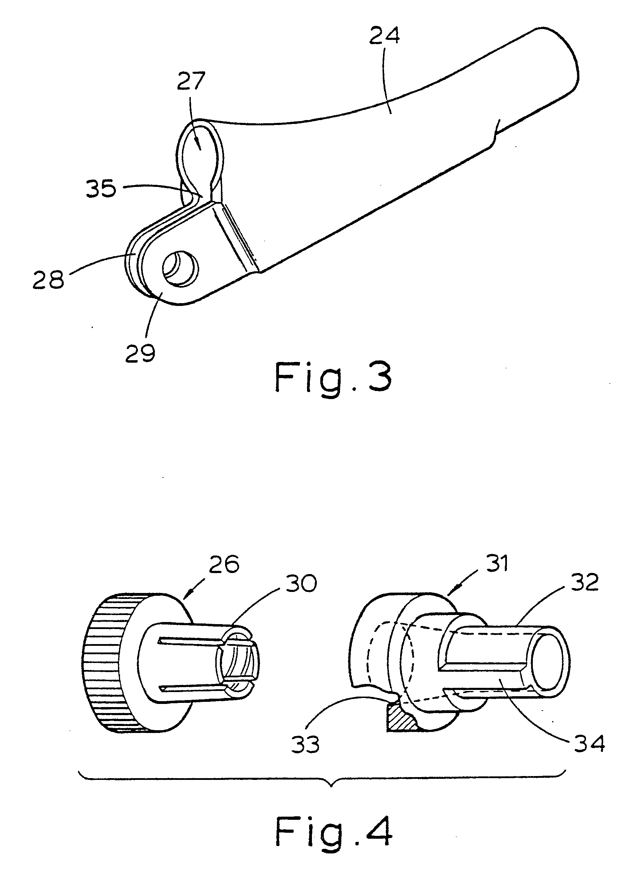

Referring to Figs. 3 and 4 showing a coupling device and associated adjuster: the coupling device 24 is formed from a single metal blank. The shaping of the blank and the manner of folding it are such that the folded blank defines a passageway 27 for the conduit of a Bowden-type mechanism and opposed marginal portions of the blank including two lobes 28,29 are brought into parallel relationship. Holes are formed in the lobes and they together form a two-ply lug to which the inner member of another Bowden-type mechanism is attached.

Fig. 4 shows the female adjustment nut 26 for screwing onto the conduit threaded through the passageway 27 of the coupling device 24. The nut has a tapered and axially slotted spigot portion 30 for clamping onto the conduit. A tubular insert component 31 is provided which has a spigot portion 32 for insertion into an end of the passageway 27 in the coupling device and which at its other end has a conical socket 33 whose angle of taper is similar to that of the tapered spigot 30 of the female adjustment member.

The spigot portion 7 of the insert component has an integral key portion 34. When the insert component is inserted into the coupling device this key portion is received by a slot 35 between opposed portions of the folded blank so that the insert component is prevented from rotating in the coupling device.

The position at which the adjuster 26 is set along the conduit onto which it is screwed determines the effective length of this conduit. The adjuster can be located at any desired position along the conduit when setting up the system and adjustments can be easily effected at any time. After adjustment the spigot portion is pushed firmly into the insert component 31 in the end of the coupling device so that this spigot portion becomes firmly clamped onto the conduit. The spigot portion is self-locking in the conical socket 33 of the insert component because of the angle of taper and the coefficient of friction between the contacting surfaces. Consequently, when a braking force is released the coupling device and adjuster move as a unit away from the hand-brake lever. If the tapered spigot portion of the adjustment nut is not pushed sufficiently firmly into the receptive socket in the insert component when setting up the system or following an adjustment, such clamping occurs automatically responsive to the first or following application of the braking load on the system.

## Claims

1. A vehicle brake system wherein an input force applied to an actuator (50) exerts pull forces on the inner members (36,55) of first and second Bowden-type flexible remote control mechanisms (37,40) for simultaneously operating first and second brakes (38,39) located at the remote ends of such mechanisms, the flexible conduit (56) of the first said mechanism (37) being connected at or near its remote end to an abutment (57) and having at or near its other end (which moves towards the actuator (50) when this is operated by said input force) a coupling device (41) by which it is connected to the inner member (55) of the second said Bowden-type mechanism (40), characterised in that said actuator (50) is operatively connected to said inner member (36) of said first Bowden-type mechanism via end portions of third and fourth Bowden-type flexible remote control mechanisms (42,46) for operating third and fourth brakes (43,47) located at the remote ends of those mechanisms, the inner member of the third Bowden-type mechanism (42) being connected to or forming an extension of said inner member (36) of the first Bowden-type mechanism, the inner member of the fourth Bowden-type mechanism (46) being connected to the conduit (58) of said third mechanism (42) and the actuator (50) being connected to the conduit (59) of the fourth mechanism (46) so that said input force on the actuator (50) exerts pull forces on the inner members of said third and fourth mechanisms (42,46) thereby causing actuation of the third and fourth brakes (43,47) simultaneously with the first and second brakes (38,39).

2. A system according to claim 1, wherein said third and fourth brakes (43,47) as well as said first and second brakes (38,39) are on independently suspended wheel support units.

3. A system according to claim 2, wherein the whole system reacts against a single abutment (51) extraneous to said wheel support units.

4. A system according to any preceding claim, wherein the conduit of at least one Bowden-type mechanism (42) is connected to the inner member of another Bowden-type mechanism (46) by a coupling device (44) forming a passageway through which such conduit is threaded and an adjustment nut (52) makes direct screw engagement with such conduit and serves to hold such coupling device (44) in a selected adjusted position along such conduit.

## Revendications

1. Système de freinage de véhicule dans lequel une force d'entrée appliquée à un organe d'actionnement (50) exerce des forces de traction sur les éléments intérieurs (36,55) d'un premier et d'un deuxième mécanismes flexibles de commande à distance du type Bowden (37,40) de manière à actionner simultanément un premier et un deuxième freins (38,39) situés aux extrémités éloignées de ces mécanismes, la gaine flexible (56) du premier (37) de ces mécanismes étant reliée, à son extrémité éloignée ou près de celle-ci, à une butée (57) et présentant à son autre extrémité (qui se meut en direction de l'organe d'actionnement (50) quand celui-ci est actionné par la force d'entrée), ou près de cette extrémité, un dispositif d'accouplement (41) par lequel elle est reliée à l'élément intérieur (55) du deuxième mécanisme du type Bowden (40), caractérisé en ce que l'organe d'actionnement (50) est relié fonctionnellement à l'élément intérieur (36) du premier mécanisme du type Bowden par l'intermédiaire de parties terminales d'un troisième et d'un quatrième mécanismes flexibles de commande à distance du type Bowden (42,46) servant à actionner un troisième et un quatrième freins (43,47) situés aux extrémités éloignées de ces mécanismes, l'élément intérieur du troisième mécanisme du type Bowden (42) étant relié à l'élément intérieur (36) du premier mécanisme du type Bowden ou formant un prolongement de cet élément, l'élément intérieur du quatrième mécanisme du type Bowden (46) étant relié à la gaine (58) du troisième mécanisme (42) et l'organe d'actionnement (50) étant relié à la gaine (59) du quatrième mécanisme (46) de sorte que la force d'entrée appliquée à l'organe d'actionnement (50) exerce des forces de traction sur les éléments intérieurs des troisième et quatrième mécanismes (42,46), causant ainsi l'actionnement des troisième et quatrième freins (43,47) en même temps que des premier et deuxième freins (38,39).

2. Système selon la revendication 1, dans lequel les troisième et quatrième freins (43,47) aussi bien que les premier et deuxième freins (38,39) se trouvent sur des unités de support de roue suspendues indépendamment.

3. Système selon la revendication 2, dans lequel l'ensemble du système réagit contre une seule butée (51) étrangère aux unités de support de roue.

4. Système selon l'une quelconque des revendications précédentes, dans lequel la gaine d'au moins un mécanisme du type Bowden (42) est reliée à l'élément intérieur d'un autre mécanisme du type Bowden (46) par un dispositif d'accouplement (44) formant un passage à travers lequel cette gaine est enfilée, et un écrou de réglage (52) se visse directement sur cette gaine et sert à maintenir le dispositif d'accouplement (44) dans une position réglée choisie le long du conduit.

## Patentansprüche

1. Ein Fahrzeugbremssystem, bei dem eine an der Betätigungseinrichtung (50) angelegte Kraft Zugkräfte auf die inneren Bauglieder (36,55) des ersten und zweiten biegsamen Bowden-Fernbetätigungsmechanismus (37,40) ausübt, um die jeweils am fernen Ende dieser Mechanismen angeordnete erste und zweite Bremse (38,39) gleichzeitig zu betätigen, wobei der Metallschlauch (56) des besagten ersten Mechanismus (37) mit dem oder kurz vor dem fernen Ende mit einem Stoßteil (57) verbunden und direkt am oder nahe am anderen Ende (das sich bei Anlegen besagter Kraft an der Betätigungseinrichtung (50) in Richtung derselben bewegt) mit einer Kuppelungsvorrichtung (41) versehen ist, die ihn mit dem inneren Bauglied (55) des zweiten besagten Bowden-Mechanismus (40) verbindet, und charakterisiert dadurch, daß besagte Betätigungseinrichtung (50) mit besagtem inneren Bauglied (36) des ersten Bowden-Mechanismus (37) über die Endabschnitte des dritten und vierten biegsamen Bowden Fernbetätigungsmechanismus (42,46) zur Betätigung verbunden ist, um die jeweils am fernen Ende dieser Mechanismen angeordnete dritte und vierte Bremse (43,47) zu betätigen, wobei das innere Bauglied des dritten Bowden-Mechanismus (42) mit besagtem inneren Bauglied (36) des ersten Bowden-Mechanismus verbunden ist oder eine Verlängerung desselben bildet, das Innenglied des vierten Bowden-Mechanismus (46) mit dem Metallschlauch (58) des dritten Bowden-Mechanismus (42) und die Betätigungseinrichtung (50) mit dem Metallschlauch (59) des vierten Bowden-Mechanismus (46) verbunden ist, so daß besagte, an der Betätigungseinrichtung (50)-

angelegte Kraft Zugkräfte auf die inneren Bauglieder der besagten dritten und vierten Mechanismen (42,46) ausübt, und hierdurch bewirkt, daß die dritte und vierte Bremse (43,47) gleichzeitig mit der ersten und zweiten Bremse (38,39) betätigt wird.

2. Ein System gemäß Anspruch 1., bei dem besagte dritte und vierte Bremse (43,47) ebenso wie besagte erste und zweite Bremse (38,39) an unabhängigen Radaufhängungseinheiten angeordnet sind.

3. Ein System gemäß Anspruch 2., bei dem das gesamte System gegen ein einzelnes, außerhalb besagter Radaufhängungseinheiten vorgesehenes Stoßteil (51) wirkt.

4. Ein System gemäß einem der vorhergehenden Ansprüche, bei dem der Metallschlauch mindestens eines Bowden-Mechanismus (42) mit dem inneren Bauglied eines anderen Bowden-Mechanismus (46) durch eine Kuppelungsvorrichtung (44) verbunden ist, die eine Führung bildet, durch die ein derartiger Metallschlauch hindurchgezogen werden kann, und die eine Einstellmutter (52) aufweist, die eine direkte Schraubverbindung mit dem Metallschlauch herstellt und dazu dient, die Kuppelungsvorrichtung (44) am Metallschlauch in einer bestimmten Justierstellung zu halten.

Fig.1

Fig. 2

Fig.3

Fig.4